Europäisches Patentamt

European Patent Office

Office européen des brevets

(19)

(11) Veröffentlichungsnummer: **0 227 186 B1**

(12) **EUROPÄISCHE PATENTSCHRIFT**

(45) Veröffentlichungstag der Patentschrift: **14.04.93**

(51) Int. Cl.5: **H04M 19/02**

(21) Anmeldenummer: **86202293.6**

(22) Anmeldetag: **16.12.86**

(54) **Schaltungsanordnung zur Auswertung der Ausgangssignale von Stromflussdetektoren in Fernmeldeanlagen.**

(30) Priorität: **21.12.85 DE 3545574**

(43) Veröffentlichungstag der Anmeldung:
**01.07.87 Patentblatt 87/27**

(45) Bekanntmachung des Hinweises auf die Patenterteilung:
**14.04.93 Patentblatt 93/15**

(84) Benannte Vertragsstaaten:
**DE FR GB SE**

(56) Entgegenhaltungen:
**EP-A- 0 092 807**
**DE-A- 2 851 914**
**DE-B- 2 359 867**
**FR-A- 1 409 623**
**FR-A- 2 386 209**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB SE**

(72) Erfinder: **Schmidt, Manfred, Dipl.-Ing.**
**Gartenstrasse 15**
**W-8740 Salz(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1 (DE)**

Rank Xerox (UK) Business Services
(3.10/3.5x/3.0.1)

EP 0 227 186 B1

## Beschreibung

Die Erfindung betrifft eine Schaltungsanordnung zur Auswertung der Ausgangssignale von Stromflußdetektoren in Fernmeldeanlagen,
mit einer in einer Vermittlungsstelle angeordneten Stromflußdetektionsschaltung, die mindestens mit einer Teilnehmer-Anschlußleitung verbunden ist und die aus zwei zu einem Widerstand antiparallel geschalteten Optokopplern besteht, und mit einer mit der Stromflußdetektionsschaltung gekoppelten Auswerteschaltung.

Die Detektion des Stromflusses ist ein Kriterium, welches bei technischen Einrichtungen häufig benötigt wird. In Fernmeldeanlagen kann mittels Stromflußdetektoren das Fließen eines Schleifengleichstroms und/oder eines Rufwechselstroms erkannt werden. Aus der DE-A-23 59 867 ist eine Schaltungsanordnung für wechselstromüberlagerte Gleichstromkreise in Fernmeldeanlagen bekannt, bei der mittels Optokoppler das Fließen des Schleifengleichstroms und/oder des Rufwechselstroms erkannt wird und die Ausgangssignale der Stromflußdetektoren von einer Auswerteschaltung ausgewertet werden. Die von den Stromflußdetektoren ermittelten Nulldurchgänge des Schleifenstroms werden in der Auswerteschaltung zur Überwachung hierbei herangezogen.

Weiterhin ist aus der DE-A-29 25 409 eine Schaltungsanordnung zum Erkennen der Meldung eines angerufenen Teilnehmers bekannt, bei der das Melden eines angerufenen Teilnehmers auch während der Rufstromaussendung erkannt wird. Die Teilnehmereinrichtung wird von der Vermittlungseinrichtung aus über die Teilnehmer-Anschlußleitung ferngespeist. Die Amplitude des dabei fließenden Schleifengleichstroms ist ebenso wie die Amplitude des Rufwechselstromes abhängig von der Leitungslänge der Teilnehmer-Anschlußleitung. Mit der Teilnehmer-Anschlußleitung sind sogenannte Schleifenstromerkenner (Stromflußdetektoren) verbunden, wobei anhand des logischen Potentials der Ausgangssignale eine Erkennung, ob Schleifengleichstrom fließt, erfolgt. Zur Detektion des Rufwechselstroms sind Optokoppler vorgesehen, welche über Kontakte eines Relais des Rufgenerators und Trennkondensatoren mit der Teilnehmer-Anschlußleitung verbunden sind. Zur Erkennung von Schleifengleichstrom und Rufwechselstrom werden die Ausgangssignale der Schleifenstromerkenner und der Optokoppler einer Auswerteschaltung, bestehend aus einer umfangreichen Gatterlogik, zugeführt. Die Auswertung, ob dem Schleifengleichstrom ein Rufwechselstrom überlagert ist, erfolgt während des Null-Durchgangs des Rufwechselstromes. Die Optokoppler, welche antiparallel zueinander geschaltet sind, sind im gleichstromfreien Zweig der Rufstromzuleitung parallel zu einem in der Rufstromzuleitung liegenden Widerstand angeordnet.

Die aus der DE-AS 29 25 409 bekannte Schaltungsanordnung weist den Nachteil auf, daß der Schaltungsaufwand für die Auswerteschaltung relativ hoch ist und daß die von den Schleifenstromerkennern gelieferten Ausgangssignale nur dann als gültig angesehen werden, wenn von den Optokopplern ein Null-Durchgang des Rufwechselstroms erkannt wird. In der Teilnehmer-Anschlußleitung eingekoppelte Störspannungen, z.B. Längsspannungen, können zu falschen Ergebnissen in der Auswerteschaltung führen.

Weiterhin weisen die aus der DE-AS 23 59 867 und der DE-AS 29 25 409 bekannten Schaltungsanordnungen den Nachteil auf, daß versteckte Störungen durch Leitungsunterbrechungen bzw. Erdschluß in der Teilnehmer-Anschlußleitung bei fließenden Rufwechselstrom nicht erkannt werden.

Der Erfindung liegt die Aufgabe zugrunde, eine Schaltungsanordnung zur Auswertung der Ausgangssignale von Stromflußdetektoren in Fernmeldeanlagen anzugeben, mit der Störungen in der Teilnehmer-Anschlußleitung zuverlässig erkannt werden können.

Diese Aufgabe wird durch eine Schaltungsanordnung der eingangs genannten Art dadurch gelöst,
daß die Auswerteschaltung
- während einer vorgebbaren Auswertedauer zur Messung der Zeitdauern von positiver und negativer Halbwelle des Schleifenstroms vorgesehen ist,
- zur Erkennung auf Leitungsunterbrechung oder Erdschluß in der b-Ader der Teilnehmer-Anschlußleitung vorgesehen ist, wenn die Summe der beiden Zeitdauern kleiner als eine erste fest vorgebbare Schwelle ist,
- zur Erkennung auf Rufwechselstromaussendung und Teilnehmerschleife nicht geschlossen vorgesehen ist, wenn das Verhältnis der beiden Zeitdauern eine zweite vorgebbare Schwelle nicht überschreitet,
- zur Erkennung auf Rufwechselstromaussendung und Teilnehmerschleife geschlossen vorgesehen ist, wenn das Verhältnis der beiden Zeitdauern die zweite Schwelle überschreitet und kleiner oder gleich einer dritten vorgebbaren Schwelle ist, und
- zur Erkennung auf Erdschluß in der a-Ader der Teilnehmer-Anschlußleitung vorgesehen ist, wenn das Verhältnis der beiden Zeitdauern die dritte Schwelle überschreitet.

Durch die Auswertung des Verhältnisses von positiver und negativer Halbwelle des Schleifenstroms können versteckte Störungen durch Leitungsunterbrechungen bzw. Erdschluß in der Teilnehmer-Anschluß-

EP 0 227 186 B1

leitung erkannt werden. Auch in die Teilnehmer-Anschlußleitung eingekoppelte Störspannungen, z.B. Längsspannungen, führen zu keiner Verfälschung der Ergebnisse in der Auswerteschaltung.

In einer Ausgestaltung der Erfindung ist vorgesehen, daß eine zweite Stromflußdetektionsschaltung in der b-Ader der Teilnehmer-Anschlußleitung angeordnet ist, die mit der Auswerteschaltung verbunden ist. Hiermit ist in der Auswerteschaltung die Unterscheidung einer Störung durch Erdschluß oder Leitungsunterbrechung in der Teilnehmer-Anschlußleitung möglich.

In einer weiteren Ausgestaltung der Erfindung ist vorgesehen, daß ein Stromflußdetektor parallel zum Rufgenerator angeordnet ist und

daß die Auswerteschaltung anhand des Ausgangssignals des Stromflußdetektors zur synchronen Auswertung mit Abschätzung der Größe von in der Teilnehmer-Anschlußleitung eingekoppelter Längsspannungen dient. Der parallel zum Rufgenerator angeordnete Stromflußdetektor ermittelt die Sollstromrichtung des Rufwechselstromes. Damit kann die Auswertung synchron erfolgen und Frequenz-Toleranzen des Rufgenerators beeinflussen die Auswertung nicht.

Eine Weiterbildung der Erfindung ist duch folgende Merkmale gekennzeichnet:

Die Stromflußdetektionsschaltung ist zur Zuführung von zwei Ausgangssignalen zu jeweils einem Eingang eines ODER-Glieds vorgesehen.

Jedes ODER-Glied ist zum Anlegen eines Zähltaktes an den jeweiligen anderen Eingang vorgesehen.

Die Ausgänge der beiden ODER-Glieder sind jeweils mit dem Takteingang eines Zählers verbunden.

Jeder Zähler ist zum Anlegen eines Auswertetaktes an den Reset-Eingang vorgesehen.

Die Auswerteschaltung ist mit den beiden Zählern verbunden und ist zur Durchführung der Auswertung anhand der von den Zählern zu liefernden Zählerstände vorgesehen.

Diese Weiterbildung, die insbesondere zur Vorverarbeitung der Ausgangssignale der Stromflußdetektoren dient, ist einfach aufgebaut und führt zu einer einfachen Verarbeitung der Signale in der Auswerteschaltung.

Zur Begrenzung des vom Rufgenerator gelieferten Rufwechselstromes im Falle eines Erdschlusses in der Teilnehmer-Anschlußleitung ist zwischen einem Anschluß des Rufgenerators und einem Anschluß der a-Ader der Teilnehmer-Anschlußleitung ein Kaltleiterwiderstand eingefügt.

Die Erfindung wird nachstehend anhand der in der Zeichnung dargestellten Ausführungsform näher beschrieben und erläutert. Es zeigt:

Fig. 1    eine erste Ausführungsform für die Anordnung der Stromflußdetektoren in der Teilnehmer-Anschlußleitung,

Fig. 2    den zeitlichen Verlauf der Ausgangssignale der Stromflußdetektoren,

Fig. 3    eine zweite Ausführungsform für die Anordnung der Stromflußdetektoren in der Teilnehmer-Anschlußleitung,

Fig. 4    eine Ausführungsform für die Vorverarbeitung der von den Stromflußdetektoren gelieferten Ausgangssignale und

Fig. 5    den Programmablaufplan der erfindungsgemäßen Auswerteschaltung.

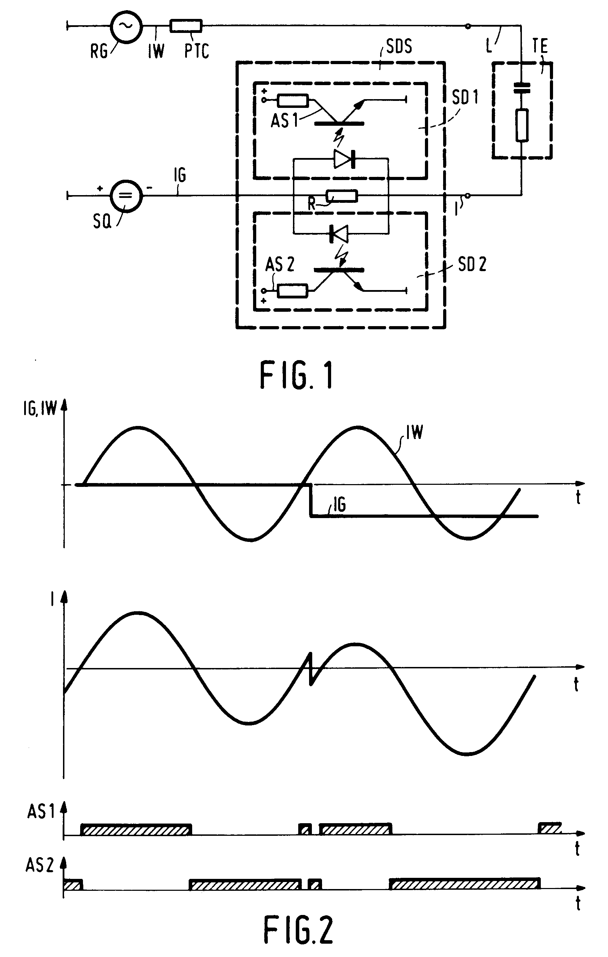

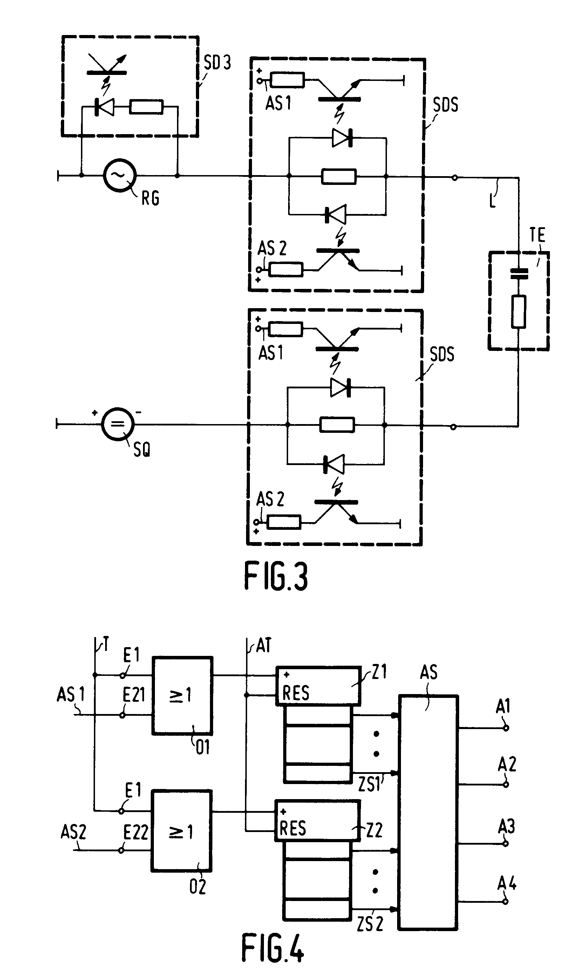

Fig. 1 zeigt eine erste Ausführungsform für die Anordnung von Stromflußdetektoren SD1 und SD2 in der a-Ader einer Teilnehmer-Anschlußleitung L. Zur Stromflußdetektion sind in einer Stromflußdetektionsschaltung SDS zwei zueinander antiparallel liegende Optokoppler SD1 und SD2 zu einem Widerstand R parallel angeordnet. Mittels der Optokoppler SD1 und SD2 kann die Stromrichtung bei Einspeisung des Rufwechselstroms mittels eines Rufgenerators RG in die b-Ader der Teilnehmer-Anschlußleitung L detektiert werden. Eine mit der Teilnehmer-Anschlußleitung L verbundene Teilnehmereinrichtung TE wird von einer in der Vermittlungseinrichtung angeordneten Speisequelle SQ ferngespeist. Die Ausgangssignale der Stromflußdetektoren SD1 und SD2 werden einer Auswerteschaltung AS zugeführt (vergleiche Fig. 4) Um bei Erdschluß in einer der beiden Adern der Teilnehmer-Anschlußleitung L den vom Rufgenerator RG gelieferten Rufwechselstrom zu begrenzen, ist in der b-Ader der Teilnehmer-Anschlußleitung L ein PTC-Widerstand (Kaltleiterwiderstand) PTC angeordnet. Durch die antiparallele Anordnung der Stromflußdetektoren SD1 und SD2 sind diese in jeweils einer Halbwelle des Rufwechselstroms aktiv. Um Störeinflüsse zu reduzieren kann mittels des Widerstands R eine Schwelle (Mindeststrom für die Erkennung) vorgegeben werden.

Fig. 2 zeigt den zeitlichen Verlauf der Ausgangssignale AS1 und AS2 der Stromflußdetektoren SD1 und SD2. Bei einem über die Teilnehmer-Anschlußleitung L fließenden gleichstromfreien sinusförmigen Rufwechselstrom IW sind die Stromflußdetektoren SD1 und SD2 abwechselnd aktiv, wobei sich die Einschaltzeiten im Verhältnis wie 1:1 zueinander verhalten. Hat der Teilnehmer abgehoben, so fließt zusätzlich ein Speisegleichstrom IG und das Verhältnis der Einschaltzeiten der Stromflußdetektoren SD1 und SD2 ändert sich. Aus diesen Zeiten, bzw. aus dem Verhältnis der Einschaltzeiten zueinander, lassen sich nun Rückschlüsse auf den Zustand der Teilnehmeranschluß-Leitung L ziehen.

Die Auswertung in der Auswerteschaltung AS ist dabei nicht allein auf den Anwendungsfall in einer ferngespeisten Teilnehmereinrichtung TE beschränkt, sondern kann auch Anwendung bei von einer Ortsbatterie gespeisten Teilnehmereinrichtung TE finden.

Durch entsprechende Dimensionierung des Widerstands R können, z.B. bei Erdschluß in der Teilnehmer-Anschlußleitung L, in diese eingekoppelte Störsignale für die Auswertung unterdrückt werden, wobei der Wert des Mindeststroms bei einigen mA liegt. Bei einer vom Rufgenerator RG erzeugten Rufwechselspannung der Amplitude 60V und der Frequenz 25 Hz liegt die Auswertedauer in der Auswerteschaltung AS bei 40 ms. Während dieser Auswertedauer wird die Zeitdauer der positiven und negativen Halbwelle des Schleifenstroms I bestimmt. Liegt die Summe der beiden Meßwerte unter einer ersten vorgegebenen Schwelle, wobei der Schwellenwert für den Summenwert der Zeitdauern bei ungefähr Null liegt, so erkennt die Auswerteschaltung AS auf Leitungsunterbrechung oder Erdschluß in der b-Ader, da über die Teilnehmereinrichtung TE kein Rufwechselstrom IW geflossen ist. In einem weiteren Auswerteschritt werden die beiden Zeitdauern ins Verhältnis zueinander gesetzt und dieses Verhältnis mit einer zweiten Schwelle in der Auswerteschaltung AS verglichen. Liegt das Verhältnis für die Zeitdauer der negativen Halbwelle zur positiven Halbwelle bei beispielsweise 1:1, so erkennt die Auswerteschaltung AS auf Fließen des Rufwechselstroms IW. Ist das Verhältnis von negativer zu positiver Halbwelle des Schleifenstroms I zu höheren Werten hin verschoben, beispielsweise zu einem Verhältnis von 1:1,5, so erkennt die Auswerteschaltung AS auf Fließen des Rufwechselstroms IW und Teilnehmerschleife geschlossen. Steigt dieses Verhältnis weiterhin an und wird eine dritte Schwelle überschritten, d.h. die Zeitdauer der negativen Halbwelle entspricht ungefähr der Auswertedauer, so erkennt die Auswerteschaltung AS auf Erdschluß in der a-Ader.

Fig. 3 zeigt eine zweite Ausführungsform für die Anordnung der Stromflußdetektionsschaltung SDS in der Teilnehmer-Anschlußleitung L. Durch die Anordnung der zweiten Stromflußdetektionsschaltung SDS in der b-Ader der Teilnehmer-Anschlußleitung L kann in der Auswerteschaltung AS anhand der Ausgangssignale AS1,AS2 der beiden Stromflußdetektionsschaltungen SDS eine Unterscheidung zwischen Erdschluß und Leitungsunterbrechung vorgenommen werden. Weiterhin ist ein Stromflußdetektor SD3 parallel zum Rufgenerator RG angeordnet, was dazu führt, daß in der Auswerteschaltung AS anhand der Ausgangssignale des Stromflußdetektors SD3 eine synchrone Auswertung mit Abschätzung der Größe von in der Teilnehmer-Anschlußleitung L eingekoppelter Längsspannungen erfolgt. Dadurch können auch Frequenz-Toleranzen des Rufgenerators RG kompensiert und die Auswertesicherheit in der Auswerteschaltung AS erhöht werden.

Die erfindungsgemäße Kombination von Stromflußdetektoren und Ausgestaltung der Auswerteschaltung AS ist nicht nur auf die in Fig.1 dargestellte Einspeisung von Rufwechselstrom IW und Speisegleichstrom IG beschränkt, sondern kann auch bei Einspeisung des Speisegleichstroms IG und des Rufwechselstroms IW in der gleichen Ader der Teilnehmer-Anschlußleitung L Anwendung finden.

Fig. 4 zeigt eine Ausführungsform für die Vorverarbeitung der von der Stromflußdetektionsschaltung SDS gelieferten Ausgangssignale AS1 und AS2. Hierbei werden die beiden Ausgangssignale AS1 und AS2 der Stromflußdetektionsschaltung SDS jeweils einem Eingang E21, E22 eines ODER-Glieds 01 und 02 zugeführt. Am anderen Eingang E1 der beiden ODER-Glieder 01 und 02 liegt der Zähltakt T an. Die Ausgänge der beiden ODER-Glieder 01 und 02 sind jeweils mit dem Takteingang zweier Zähler Z1 und Z2 verbunden. Am Reset-Eingang RES der beiden Zähler Z1 und Z2 liegt der Auswertetakt AT an. Die Auswerteschaltung AS ist mit den beiden Zählern Z1 und Z2 verbunden und nimmt anhand eines Vergleichs der Zählerstände ZS1 und ZS2 mit vorgebbaren Schwellen die Auswertung vor.

4

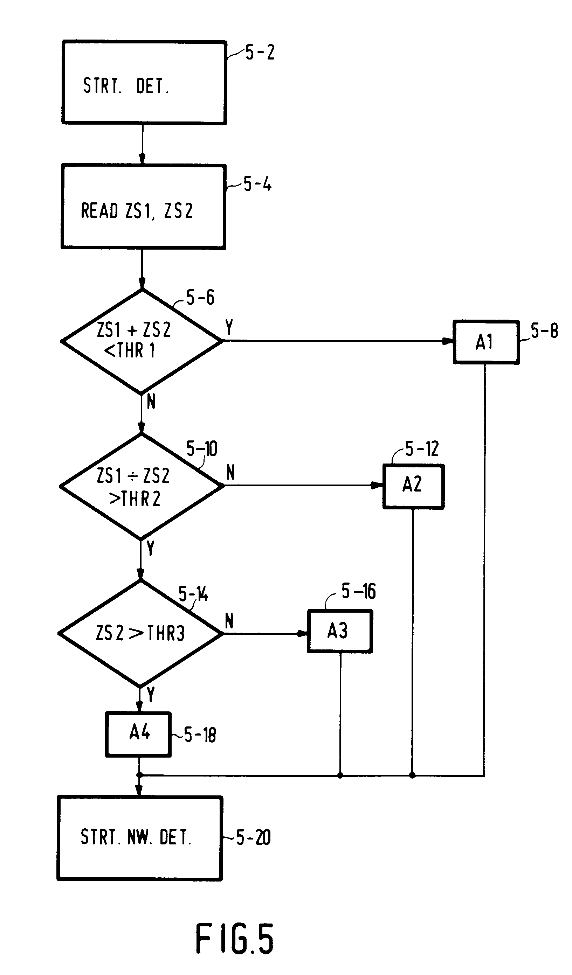

In Fig. 5 ist der Programmablaufplan der erfindungsgemäßen Auswerteschaltung AS dargestellt.

| Bezugsnr. | Aufschrift | Bedeutung |
|---|---|---|
| 5-2 | STRT.DET. | Beginn eines Auswertzyklus; |
| 5-4 | READ ZS1, ZS2 | die Zählerstände ZS1 und ZS2 der beiden Zähler Z1 und Z2 werden ausgelesen; |
| 5-6 | ZS1+ZS2<THR1 | prüfe, ob die Summe der beiden Zählerstände ZS1 und ZS2 kleiner ist als eine erste Schwelle; |
| 5-8 | A1 | die Auswerteschaltung erkennt auf Leitungsunterbrechung oder Erdschluß in der b-Ader; |
| 5-10 | ZS1:ZS2>THR2 | prüfe, ob das Verhältnis der beiden Zählerstände eine zweite Schwelle überschreitet; |
| 5-12 | A2 | die Auswerteschaltung erkennt auf Rufwechselstromaussendung und Teilnehmerschleife nicht geschlossen; |
| 5-14 | ZS2>THR3 | prüfe, ob der Zählerstand ZS2 eine dritte Schwelle überschreitet; |
| 5-16 | A3 | die Auswerteschaltung erkennt auf Rufwechselstromaussendung und Teilnehmerschleife geschlossen; |
| 5-18 | A4 | die Auswerteschaltung erkennt auf Erdanschluß in der a-Ader der Teilnehmer-Anschlußleitung; |
| 5-20 | STRT.NW.DET. | Beginn eines neuen Auswertzyklus. |

Zu Beginn der Auswertung werden die Zählerstände ZS1 und ZS2 der beiden Zähler Z1 und Z2 ausgelesen und die Summe der beiden Zählerstände ZS1 und ZS2 wird mit einer ersten fest vorgegebenen Schwelle verglichen. Der Schwellenwert liegt ungefähr beim Wert 0, wobei die Auswerteschaltung AS falls die Summe der beiden Zählerstände ZS1 und ZS2 unter der ersten Schwelle liegt, auf Leitungsunterbrechung oder Erdschluß in der b-Ader der Teilnehmer-Anschlußleitung L erkennt. Weiterhin wird in der Auswerteschaltung AS aus dem Verhältnis der beiden Zählerstände ZS1 und ZS2, entsprechend der Zeitdauer von positiver und negativer Halbwelle des Schleifenstroms I, weitere Kriterien abgeleitet.

Ist das Verhältnis der beiden Zählerstände ZS1 und ZS2 annähernd 1:1, so erkennt die Auswerteschaltung AS auf Rufwechselstromaussendung und Teilnehmerschleife nicht geschlossen. Hierzu wird das so gebildete Verhältnis mit einer zweiten Schwelle verglichen, wobei der Schwellenwert abhängig ist von dem Verhältnis von Rufspannung zu Speisespannung.

Ist das Verhältnis annähernd 1:1,5 (Schwelle 3), so erkennt die Auswerteschaltung AS auf Rufwechselstromaussendung und Teilnehmerschleife geschlossen.

Nimmt der Zählerstand ZS2 große Werte an und überschreitet die dritte vorgegebene Schwelle, so erkennt die Auswerteschaltung AS auf Erdschluß in der a-Ader der Teilnehmer-Anschlußleitung L.

Die Ergebnisse des Auswertezyklus sind an den Ausgängen A1 bis A4 (vergleiche Fig. 4) der Auswerteschaltung AS abgreifbar.


**Patentansprüche**

1. Schaltungsanordnung zur Auswertung der Ausgangssignale von Stromflußdetektoren in Fernmeldeanlagen,
mit einer in einer Vermittlungsstelle angeordneten Stromflußdetektionsschaltung (SDS), die mindestens mit einer Teilnehmer-Anschlußleitung (L) verbunden ist und die aus zwei zu einem Widerstand (R) antiparallel geschalteten Optokopplern (SD1, SD2) besteht, und mit einer mit der Stromflußdetektionsschaltung gekoppelten Auswerteschaltung (AS),
dadurch gekennzeichnet,
daß die Auswerteschaltung (AS)
   - während einer vorgebbaren Auswertedauer zur Messung der Zeitdauern von positiver und negativer Halbwelle des Schleifenstroms (I) vorgesehen ist,
   - zur Erkennung auf Leitungsunterbrechung oder Erdschluß in der b-Ader der Teilnehmer-Anschlußleitung (L) vorgesehen ist, wenn die Summe der beiden Zeitdauern kleiner als eine erste fest vorgebbare Schwelle ist,
   - zur Erkennung auf Rufwechselstromaussendung und Teilnehmerschleife nicht geschlossen vorgesehen ist, wenn das Verhältnis der beiden Zeitdauern eine zweite vorgebbare Schwelle nicht überschreitet,
   - zur Erkennung auf Rufwechselstromaussendung und Teilnehmerschleife geschlossen vorgesehen ist, wenn das Verhältnis der beiden Zeitdauern die zweite Schwelle überschreitet und kleiner oder gleich einer dritten vorgebbaren Schwelle ist, und
   - zur Erkennung auf Erdschluß in der a-Ader der Teilnehmer-Anschlußleitung (L) vorgesehen ist, wenn das Verhältnis der beiden Zeitdauern die dritte Schwelle überschreitet.


2. Schaltungsanordnung nach Anspruch 1,
dadurch gekennzeichnet,
daß eine zweite Stromflußdetektionsschaltung (SDS) in der b-Ader der Teilnehmer-Anschlußleitung (L) angeordnet ist, die mit der Auswerteschaltung (AS) verbunden ist.


3. Schaltungsanordnung nach Anspruch 1 oder 2,
dadurch gekennzeichnet,
daß ein Stromflußdetektor (SD3) parallel zum Rufgenerator (RG) angeordnet ist und
daß die Auswerteschaltung (AS) anhand des Ausgangssignals des Stromflußdetektors (SD3) zur synchronen Auswertung mit Abschätzung der Größe von in der Teilnehmer-Anschlußleitung (L) eingekoppelter Längsspannungen dient.


4. Schaltungsanordnung nach einem der vorhergehenden Ansprüche, dadurch gekennzeichnet,
daß die Stromflußdetektionsschaltung (SDS) zur Zuführung von zwei Ausgangssignalen (AS1,AS2) zu jeweils einem Eingang (E21, E22) eines ODER-Glieds (01, 02) vorgesehen ist, daß jedes ODER-Glied (01, 02) zum Anlegen eines Zähltaktes (T) an den jeweiligen anderen Eingang vorgesehen ist, daß die Ausgänge der beiden ODER-Glieder (01, 02) jeweils mit dem Takteingang eines Zählers (Z1, Z2) verbunden sind, daß jeder Zähler (Z1, Z2) zum Anlegen eines Auswertetaktes an den Reset-Eingang (RES) vorgesehen ist und
daß die Auswerteschaltung (AS) mit den beiden Zählern (Z1, Z2) verbunden ist und zur Durchführung der Auswertung anhand der von den Zählern (Z1, Z2) zu liefernden Zählerstände (ZS1,ZS2) vorgesehen ist.

**5.** Schaltungsanordnung nach Anspruch 4,
dadurch gekennzeichnet,
daß zwischen einem Anschluß des Rufgenerators (RG) und einem Anschluß der a-Ader der Teilnehmer-Anschlußleitung (L) ein Kaltleiterwiderstand (PTC) eingefügt ist.

**Claims**

**1.** Circuit arrangement for the evaluation of the output signals of current flow detectors in telecommunication systems, comprising a current flow detection circuit (SDS) arranged in an exchange, which detection circuit is connected to at least one subscriber line (L) and comprises two optocouplers (SD1, SD2) arranged in anti-parallel with a resistor (R), and which arrangement includes an evaluation circuit (AS) coupled to the current flow detection circuit, characterized in that the evaluation circuit (AS) is provided for:
- measuring during a predeterminable evaluation period the periods of time of positive and negative half-waves of the loop current (I),
- deciding on line interruption or short-circuit to earth in the b-wire of the subscriber line (L), if the sum of the two periods of time is smaller than a first fixed presettable threshold,
- deciding on transmission of ringing alternating current whereas the subscriber loop is not closed, if the ratio between the two periods of time does not exceed a second presettable threshold,
- deciding on transmission of ringing alternating current with a closed subscriber loop, if the ratio between the two periods of time exceeds the second threshold and is smaller than or equal to a third presettable threshold, and
- deciding on short-circuit to earth in the a-wire of the subscriber line (L), if the ratio between the two periods of time exceeds the third threshold.

**2.** Circuit arrangement as claimed in Claim 1, characterized in that a second current flow detection circuit (SDS) is included in b-wire of the subscriber line (L), which is connected to the evaluation circuit (AS).

**3.** Circuit arrangement as claimed in Claim 1 or 2, characterized in that a current flow detector (SD3) is arranged in parallel with the ringing current generator (RG), and in that, on the basis of the output signal of the current flow detector (SD3), the evaluation circuit (AS) is used for synchronous evaluation with an estimated magnitude of longitudinal voltages inserted in the subscriber line (L).

**4.** Circuit arrangement as claimed in one of the preceding Claims, characterized in that the current flow detection circuit (SDS) is provided for applying two output signals (AS1, AS2) to an input (E21, E22) of two OR elements (01, 02), in that each OR element (01, 02) is provided to have another input for receiving a counter clock signal (T), in that the outputs of the two OR elements (01, 02) are connected each to a clock signal input of a counter (Z1, Z2), in that each counter (Z1, Z2) is provided to have a reset input (RES) for receiving an evaluation clock signal and in that the evaluation circuit (AS) is provided to be connected to the two counters (Z1, Z2) and to carry out the evaluation on the basis of the counts (ZS1, ZS2) to be supplied by the counters (Z1, Z2).

**5.** Circuit arrangement as claimed in Claim 4, characterized in that a PTC resistor (PTC) is inserted between one terminal of the ringing current generator (RG) and one terminal of the a-wire of the subscriber line (L).

**Revendications**

**1.** Montage de circuit permettant d'évaluer les signaux de sortie de détecteurs de flux de courant dans des installations de télécommunications, comportant un circuit de détection de flux de courant (SDS) agencé dans un central téléphonique, qui est connecté au moins à une ligne d'abonné (L) et est constitué de deux optocoupleurs (SD1, SD2) raccordés en connexion antiparallèle à une résistance (R), et un circuit d'évaluation (AS) couplé au circuit de détection de flux de courant, caractérisé en ce que le circuit d'évaluation (AS)
- est prévu, pendant une durée d'évaluation prédéterminable, pour mesurer les durées des demi-ondes positives et négatives du courant de boucle (I),
- est prévu pour identifier une coupure de ligne ou une mise à la terre dans le fil b de la ligne d'abonné (L) lorsque la somme des deux durées est inférieure à un premier seuil prédéterminable de manière fixe,

- est prévu pour identifier l'émission de courant alternatif d'appel et la non-fermeture de la boucle d'abonné lorsque le rapport des deux durées ne dépasse pas un deuxième seuil prédéterminable,
- est prévu pour identifier l'émission de courant alternatif d'appel et la fermeture de la boucle d'abonné lorsque le rapport des deux durées dépasse le deuxième seuil et est inférieur ou égal à un troisième seuil prédéterminable, et
- est prévu pour identifier la mise à la terre dans le fil a de la ligne d'abonné (L) lorsque le rapport des deux durées dépasse le troisième seuil.

2. Montage de circuit suivant selon la revendication 1, caractérisé en ce qu'un second circuit de détection de flux de courant (SDS) est installé dans le fil a de la ligne d'abonné (L) qui est connecté au circuit d'évaluation (AS).

3. Montage de circuit suivant la revendication 1 ou 2, caractérisé en ce qu'un détecteur de flux de courant (SD3) est agencé en parallèle avec le générateur d'appel et le circuit d'évaluation (AS) sert, au moyen du signal de sortie du détecteur de flux de courant (SD3), à l'évaluation synchrone avec estimation de la grandeur des composantes de tension longitudinales introduites dans la ligne d'abonné (L).

4. Montage de circuit suivant l'une quelconque des revendications précédentes, caractérisé en ce que

le circuit de détection de flux de courant (SDS) est à même d'acheminer deux signaux de sortie (AS1, AS2), chacun à une entrée (E21, E22) d'un élément logique OU (01, 02),

chaque élément logique OU (01, 02) est à même d'appliquer un rythme de comptage (T) à l'autre entrée respective,

les sorties des deux éléments logiques OU (01, 02) sont connectées chacune à l'entrée de rythme d'un compteur (Z1, Z2), chaque compteur (Z1, Z2) est prévu pour appliquer un rythme d'évaluation à l'entrée Reset (RES), et

le circuit d'évaluation (AS) est connecté aux deux compteurs (Z1, Z2) et est susceptible d'effectuer l'évaluation en se basant sur les états de comptage (ZS1, ZS2) fournis par les deux compteurs (Z1, Z2).

5. Montage de circuit suivant la revendication 4, caractérisé en ce qu'une thermistance (CTP) est intercalée entre une borne du générateur d'appel (RG) et une borne du fil a de la ligne d'abonné (L).

FIG. 1

FIG.2

FIG.3

FIG.4

STRT. DET. — 5-2

READ ZS1, ZS2 — 5-4

5-6
ZS1 + ZS2 <THR 1 — Y → A1 — 5-8

N

5-10
ZS1 ÷ ZS2 >THR2 — N → A2 — 5-12

Y

5-14
ZS2 > THR3 — N → A3 — 5-16

Y

A4 — 5-18

STRT. NW. DET. — 5-20

FIG.5